# EUROPEAN PATENT SPECIFICATION

(11) **EP 1 850 026 B1**
(45) Date of publication and mention of the grant of the patent: **19.10.2011**
(21) Application number: 06714045.9
(22) Date of filing: 14.02.2006
(51) Int. Cl.: F16D 23/14, F16D 13/75, F16D 23/12

(54) **CLUTCH RELEASE DEVICE**
KUPPLUNGSLÖSUNGSVORRICHTUNG
DISPOSITIF DE DÉBRAYAGE

(30) Priority: 15.02.2005 JP 2005038087
(43) Date of publication of application: 31.10.2007
(73) Proprietor: Toyota Jidosha Kabushiki Kaisha, Toyota-shi Aichi 471-8571 (JP)
(72) Inventor: KATO, Kimio c/o TOYOTA JIDOSHA KABUSHIKI KAISHA, Aichi, 471-8571 (JP); YAMAMOTO, Yoshihiro c/o TOYOTA JIDOSHA KABUSHIKI KAISHA, Aichi, 471-8571 (JP); HOSONO, Masaki c/o TOYOTA JIDOSHA KABUSHIKI KAISHA, Aichi, 471-8571 (JP); AIMOTO, Kiyoteru c/o TOYOTA JIDOSHA KABUSHIKI KAISHA, Aichi, 471-8571 (JP)
(74) Representative: Albutt, Anthony John
(86) International application number: PCT/JP2006/302904
(87) International publication number: WO 2006/088168

(56) References cited:
- DE-A1- 10 350 698
- GB-A- 2 034 854
- GB-A- 2 117 076
- GB-A- 2 159 596
- JP-A- 60 256 628
- JP-B1- 45 002 486

## Description

### Technical Field

The present invention relates to a clutch release device, and more particularly to a clutch release device incorporated in a vehicle.

### Background Art

A conventional clutch release device is disclosed in Japanese Patent Laying-Open No. 09-263155. A clutch release device of a known type is also disclosed in GB 2 159 596, which is considered as the closest prior art.

### Disclosure of the Invention

The above-mentioned conventional clutch release device is a cable-type clutch release device. Wear of a clutch disc leads to an increase in the pressing load of a release bearing of a diaphragm spring of a clutch cover and a decrease in the pressing load of a pressure plate. This causes clutch slippage, which requires the length of a clutch cable to be adjusted. The increase in the pressing load of the release bearing of the diaphragm spring also leads to movement of a clutch release fork lever to the transmission side and change of the height position of the clutch pedal, which poses a problem of causing discomfort to the user.

The present invention is directed to solve the above-described problem and provides a clutch release device with which the frequency of cable adjustment is decreased.

A clutch release device according to one aspect of the present invention includes a clutch release fork lever connected to a clutch cable, and a clutch release fork connected to and rotatable with the clutch release fork lever, and capable of pressing a clutch release bearing. The clutch release fork lever and the clutch release fork are fitted through splines or gears having a backlash such that the axial movement of the clutch release fork caused by wear of a clutch disc is absorbed. The clutch release device configured in this way allows the clutch release fork to be moved to the transmission side by the backlash when the clutch disc is worn. Since this prevents the change in the pressing load of the clutch release bearing, the frequency of cable adjustment can be reduced.

Furthermore, since the backlash allows only the clutch release fork to be moved, the clutch release fork lever is not moved to suppress the change in the clutch pedal position.

Preferably, the clutch release device further includes an urging member urging the clutch release fork such that the clutch release fork presses the clutch release bearing.

In this case, since the clutch release bearing can be pressed by the urging member, clutch slippage can be prevented.

A clutch release device which is not part of the present invention includes a clutch release fork lever connected to a clutch cable, a clutch release fork connected to and rotatable with the clutch release fork lever, and capable of pressing a clutch release bearing, and an urging member urging the clutch release fork such that the clutch release fork presses the clutch release bearing.

The clutch release device configured in this way is provided with the urging member urging the clutch release fork such that the clutch release fork presses the clutch release bearing. Thus, even when the clutch disc is worn, the clutch release fork presses the clutch release bearing via the urging member, and therefore, the clutch cable needs no adjustment.

According to the present invention, it is possible to provide a clutch release device which can reduce the frequency of clutch cable adjustment.

### Brief Description of the Drawings

Fig. 1 is a front view of a clutch release device according to a first embodiment of the present invention.
Fig. 2 is a side view of the clutch release device seen from the direction indicated by II in Fig. 1.
Fig. 3 is a schematic diagram showing the clutch release device in detail.
Fig. 4 is an enlarged view of a portion indicated by IV in Fig. 3.
Fig. 5 is a schematic diagram of the clutch release device in the state where a clutch disc is worn.
Fig. 6 is an enlarged view of a portion indicated by VI in Fig. 5.
Fig. 7 is a front view of a clutch release device according to a second embodiment of the present invention.
Fig. 8 is a side view of the clutch release device seen from the direction indicated by an arrow VIII in Fig. 7.
Fig. 9 is a schematic diagram showing the clutch release device in detail.
Fig. 10 is an enlarged view of the encircled portion indicated by X in Fig. 9.

### Best Modes for Carrying Out the Invention

The embodiments of the present invention will be hereinafter described with reference to the accompanying drawings, in which the same or corresponding components in each embodiment are designated by the same reference characters, and description thereof will not be repeated.

### First Embodiment

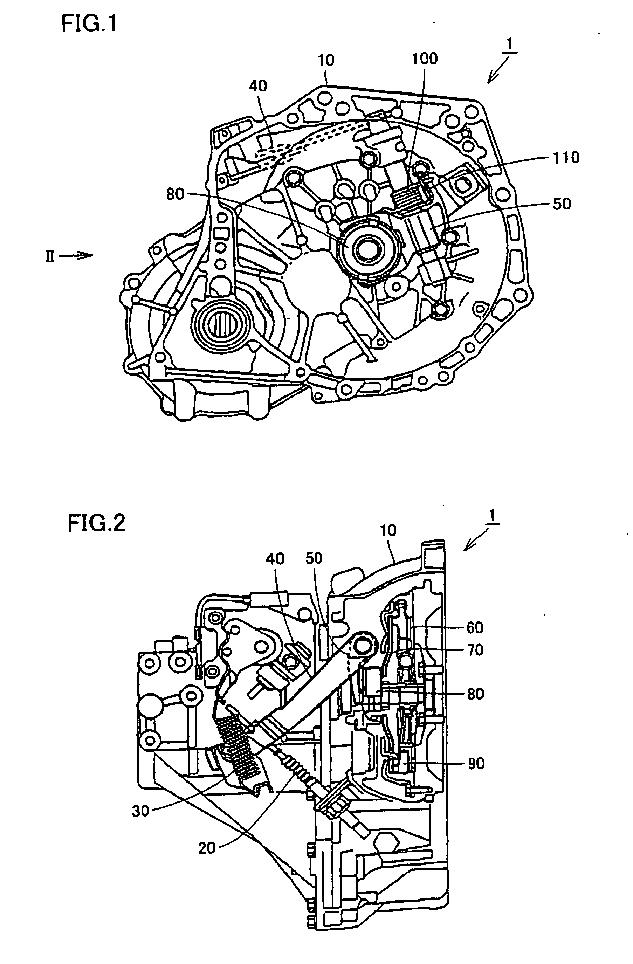

Fig. 1 is a front view of a clutch release device according to a first embodiment of the present invention. Referring to Fig. 1, the clutch release device 1 is provided between an engine and a transmission, and functions to transmit the power generated in the engine to the transmission and to disconnect the power generated in the engine from the transmission.

In Fig. 1, a so-called dry single plate clutch release device will be described. Clutch release device 1 has a casing 10 to which a clutch release fork lever 40 is attached. Clutch release fork lever 40 is connected to an end of a clutch release fork 50 to turn clutch release fork 50. Clutch release fork 50 is urged by a torsion spring 100, and clutch release fork lever 40 turns clutch release fork 50 against this urging force. Torsion spring 100 has one end attached to a stopper 110 and the other end attached to clutch release fork 50. The turn of clutch release fork 50 causes a clutch release bearing 80 to be moved in the axial direction, which leads to engagement and disengagement of a clutch.

Fig. 2 is a side view of the clutch release device seen from the direction indicated by II in Fig. 1. Referring to Fig. 2, clutch release device 1 has casing 10 in which a clutch disc 60 and a pressure plate 90 pressing clutch disc 60 are housed.

In clutch disc 60 which is in the shape of a disc, a clutch facing which is a friction member is riveted via a cushion plate on either side of a clutch blade made of, for example, steel, and a clutch hub is provided at the center for inserting a clutch shaft. The clutch facing is made of a material maintaining the appropriate coefficient of friction, having high wear resistance and high heat resistance, and having a coefficient of friction immune to the change in temperature at the time of engagement. Specifically, the clutch facing includes a resin-molded type having resin applied on a glass fiber base or a woven-molded type, and furthermore, a metallic semi-metal type or ceramic type for improving the thermal conductivity and the strength.

Pressure plate 90 pressing clutch disc 60 is in the shape of a disc, and presses clutch disc 60 against the flywheel side with uniform force. Accordingly, the surface of pressure plate 90 in contact with clutch disc 60 is processed to have a flat surface.

Pressure plate 90 is pressed by a diaphragm spring 70 toward the clutch disc 60 side. Diaphragm spring 70 is a clutch spring, functioning as a member for pressing clutch disc 60 against the flywheel via pressure plate 90. The clutch spring is not limited to diaphragm spring 70 as in this embodiment, and a coil spring may be used. Diaphragm spring 70, which is a spring in the shape of a disc, is made by the press-forming of a spring steel plate and the subsequent heat treatment thereof.

Clutch release bearing 80 is provided so as to form contact with diaphragm spring 70. Clutch release bearing 80 is interposed between the clutch shaft which is a power transmission member and clutch release fork 50, in which an inner race on the clutch shaft side rotates, and an outer race on the clutch release fork 50 side does not rotate. The clutch shaft is rotated. In order to move the clutch shaft in the axial direction by clutch release fork 50 without disturbing this rotation of the clutch shaft, clutch release bearing 80 is provided.

Clutch release fork 50 has one end connected to clutch release bearing 80 and the other end connected to clutch release fork lever 40. Clutch release fork 50 functions as a member for moving clutch release bearing 80 in the axial direction. The movement of clutch release fork 50 causes clutch disc 60 and the flywheel to be connected and disconnected.

Clutch release fork lever 40 which is a lever for moving clutch release fork 50 has one end connected to clutch release fork 50 and the other end connected to a clutch cable 20. Pulling by clutch cable 20 allows clutch release fork 50 to turn. It is to be noted that clutch release fork lever 40 is connected to a spring 30, and the spring force resisting in the direction to which clutch cable 20 pulls is applied by spring 30. Clutch cable 20 is connected to a clutch pedal. When the clutch pedal is pressed, clutch cable 20 pulls clutch release fork lever 40.

Although the dry single plate clutch release device has been described in this embodiment, the present invention can also be applied to a wet multiple plate clutch release device.

When the driver steps on the clutch pedal, this operation is transmitted to clutch cable 20 which pulls clutch release fork lever 40. This causes clutch release fork 50 to be moved in the axial direction, and this movement is transmitted to clutch disc 60 via clutch release bearing 80. As a result, clutch disc 60 is separated from the flywheel to disconnect the power.

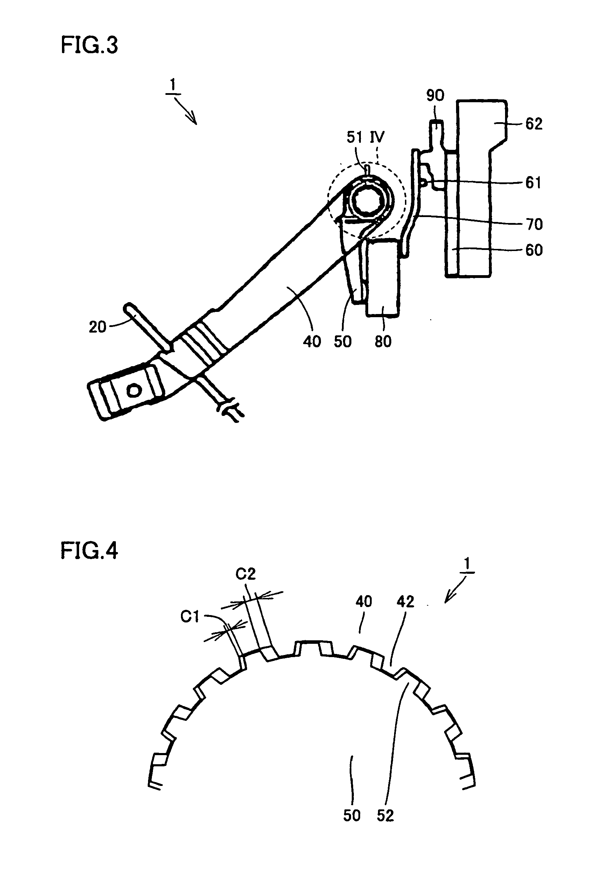

Fig. 3 is a schematic diagram showing the clutch release device in detail. Referring to Fig. 3, clutch disc 60 constituting clutch release device 1 is in the shape of a disc and is in contact with a flywheel 62 which receives power from the engine. Clutch disc 60 is pressed by a pressure plate 90 toward the flywheel 62 side. Pressure plate 90 is pressed by diaphragm spring 70, and this pressing force presses clutch disc 60 against flywheel 62. Pressure plate 90 pivots with a pivot ring 61 as a fulcrum. That is, when clutch release bearing 80 moves diaphragm spring 70 in a certain direction, the direction of this movement is changed by pivot ring 61, and pressure plate 90 is moved in the direction opposite to clutch release bearing 80. In Fig. 3, when clutch release bearing 80 moves to the right, pressure plate 90 moves to the left in the figure. Although, the present embodiment describes a so-called push-type clutch in which pivot ring 61 qualified as a fulcrum is located at an inner side than the fulcrum of pressure plate 90 and diaphragm spring 70, the present invention is not limited to this and can also be applied to a so-called pull-type clutch in which pivot ring 61 qualified as a fulcrum is located at an outer side than the contact between pressure plate 90 and diaphragm spring 70.

Clutch release fork 50 is connected to clutch cable 20 via clutch release fork lever 40. When clutch cable 20 is pulled, clutch release fork 50 is moved. Although the embodiment describes an example in which clutch cable 20 is operated by stepping on the clutch pedal, the present invention is not limited to this and can be applied to clutch release device 1 of a type that operates clutch cable 20 by actuating a clutch lever as in a motorcycle.

Fig. 4 is an enlarged view of a portion indicated by IV in Fig. 3. Referring to Fig. 4, clutch release fork 50 has a spline 52, and clutch release fork lever 40 has a spline 42. Splines 42 and 52 engage with each other, and backlashes C1 and C2 are provided therebetween as gaps. Fig. 3 shows the state before clutch disc 60 is worn, in which backlash C2 is larger than backlash C1. Although the present embodiment describes an example in which clutch release fork 50 and clutch release fork lever 40 engage with each other through the splines, they may engage with each other through gears instead of splines. In that case, there are also backlashes C1 and C2 between their respective gears.

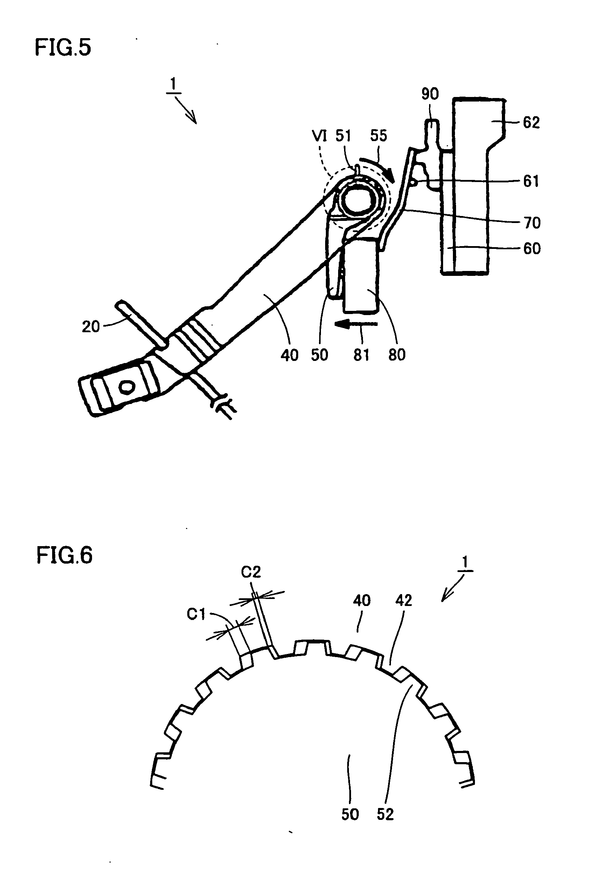

Fig. 5 is a schematic diagram of the clutch release device in the state where the clutch disc is worn. Fig. 6 is an enlarged view of a portion indicated by VI in Fig. 5. Referring to Figs. 5 and 6, when clutch disc 60 is worn, clutch disc 60 reduces in thickness, which causes pressure plate 90 to be moved to the side approaching flywheel 62. Since pressure plate 90 moves about pivot ring 61, clutch release bearing 80 in contact with diaphragm spring 70 moves in the direction shown by an arrow 81, and its end pivots in the direction of an arrow 55. This movement is absorbed by backlash C1 in Fig. 6. Specifically, C2 is larger than C1 in Fig. 4, whereas backlash C1 becomes larger than C2 when the clutch is worn. Therefore, the position of clutch release fork 50 does not change, and the frequency of adjustment of clutch cable 20 can be decreased.

In other words, clutch release device 1 according to the first embodiment includes clutch release fork lever 40 connected to clutch cable 20, and clutch release fork 50 connected to and rotatable with clutch release fork lever 40, and capable of pressing clutch release bearing 80. Clutch release fork lever 40 and clutch release fork 50 are fitted through splines 42, 52 or gears having backlashes C1, C2 such that the axial movement of clutch release fork 50 caused by wear of clutch disc 60 is absorbed. Clutch release device 1 further includes a torsion spring 51 as an urging member urging clutch release fork 50 such that clutch release fork 50 presses clutch release bearing 80.

In the cable-type clutch release device 1, by providing tooth-flank backlashes C1 and C2 for the spline fit portion of clutch release fork 50 and clutch release fork lever 40, the movement of clutch release fork 50 in the case where clutch disc 60 is worn can be absorbed, clutch slippage can be prevented, and the maintenance can be simplified.

By providing larger backlash C1 which is a tooth-flank gap of the spline fit portion of clutch release fork 50 and clutch release fork lever 40, the movement of diaphragm spring 70 in the case where clutch disc 60 is worn is absorbed by the above-described backlash C1. Therefore, slippage caused by the decreased load of the cover can be avoided. Furthermore, it is possible to achieve simplification of the maintenance in the predetermined maintenance cycle.

In addition, by providing a predetermined adjuster mechanism in the clutch release system, it becomes possible to avoid awkwardness such as increase in pedal height.

When clutch disc 60 is worn, diaphragm spring 70 of a clutch cover rises toward the transaxle side with pivot ring 61 as a fulcrum, and clutch release bearing 80 is pressed toward the transaxle side. Backlashes C1 and C2 which are tooth-flank gaps in the spline fit portion of clutch release fork 50 and clutch release fork lever 40 do not cause reduction in the pressing load of pressure plate 90 because clutch release bearing 80 moves to the transmission side when clutch disc 60 is worn. As a result, clutch slippage can be prevented.

As the clutch cable is extended, clutch release lever 40 can be rotated by backlash C2 in the direction of arrow 55. Consequently, clutch release fork 50 can regulate the movement in the direction of arrow 81, and the change in the pedal height can be suppressed.

The advantage of the present invention is summarized as follows.

Firstly, since clutch release bearing 80 can be moved toward the transmission side, the pressing force of pressure plate 90 of the clutch cover does not decrease, and therefore, no clutch slippage occurs.

Secondly, even when clutch disc 60 is worn, the maintenance cycle of clutch cable 20 can be kept constant and the maintenance can be simplified.

Furthermore, since clutch release fork lever 40 does not move, the pedal height also does not change and the discomfort at the time of pedal step-down can be prevented.

### Second Embodiment

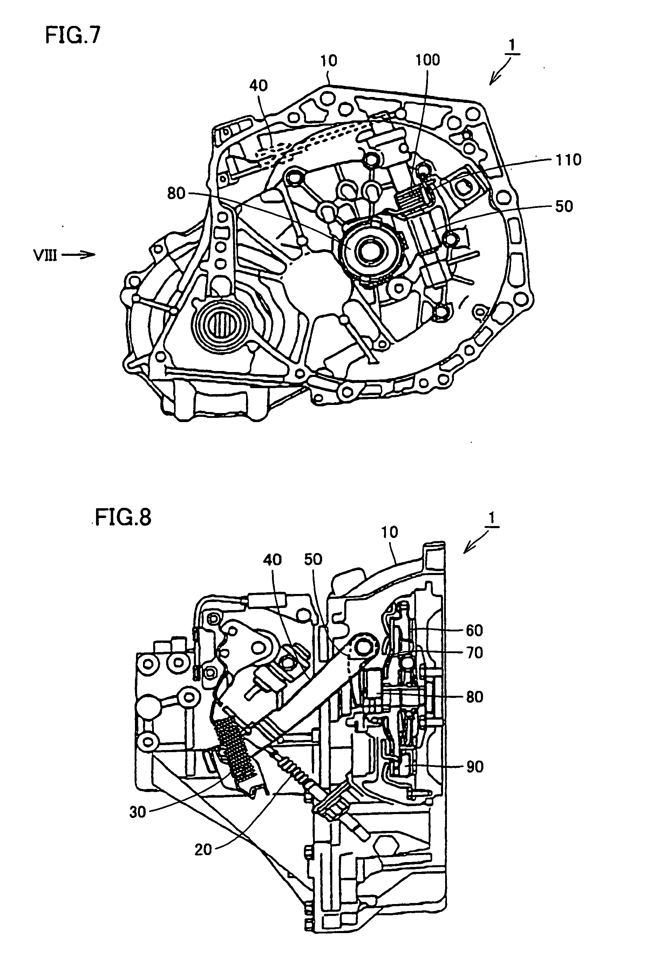

Fig. 7 is a front view of a clutch release device according to a second embodiment of the present invention. Fig. 8 is a side view of the clutch release device seen from the direction indicated by an arrow VIII in Fig. 7. Referring to Figs. 7 and 8, the clutch release device 1 has a casing 10 to which a clutch release fork lever 40 is attached. Clutch release fork lever 40 is connected to an end of a clutch release fork 50 to turn clutch release fork 50. Clutch release fork 50 is urged by a torsion spring 100, and clutch release fork lever 40 turns clutch release fork 50 against this urging force. Torsion spring 100 has one end attached to a stopper 110 and the other end attached to clutch release fork 50. The turn of clutch release fork 50 causes a clutch release bearing 80 to be moved in the axial direction, which leads to engagement and disengagement of a clutch. A clutch disc 60 and a pressure plate 90 pressing clutch disc 60 are housed in casing 10.

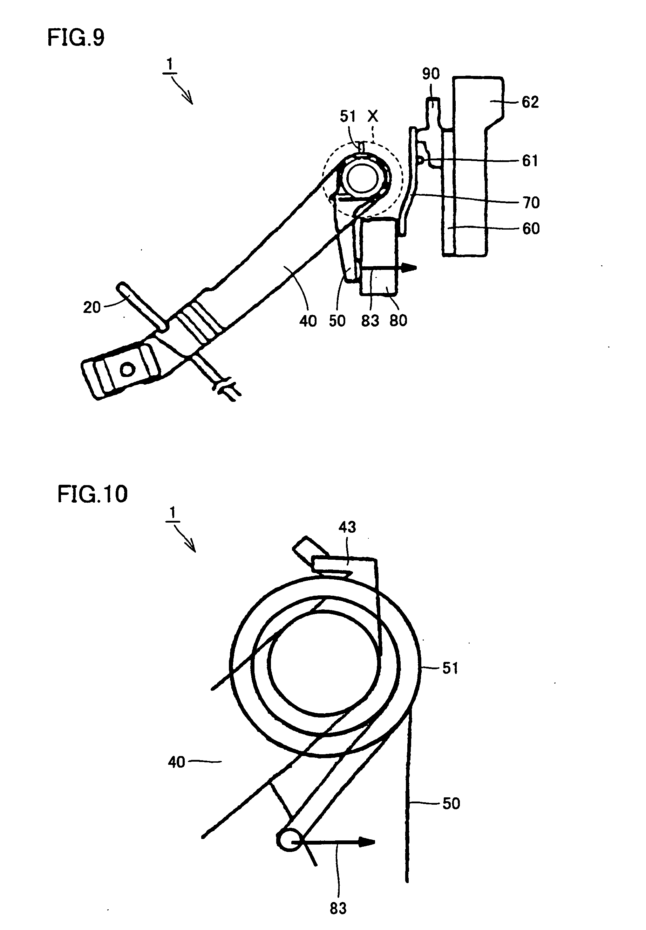

Fig. 9 is a schematic diagram showing the clutch release device in detail. Fig. 10 is an enlarged view of the encircled portion indicated by X in Fig. 9. Referring to Figs. 9 and 10, in clutch release device 1 according to the second embodiment which has no spline, clutch release fork 50 and clutch release fork lever 40 are connected by a torsion spring 51. Torsion spring 51 has one end engaged with a stopper 43 of clutch release fork lever 40 and the other end engaged with clutch release fork 50. Clutch release fork 50 is continuously urged by torsion spring 51 in the direction shown by an arrow 83. In the case where torsion spring 51 is not provided, clutch release fork 50 is rotatably provided relative to clutch release fork lever 40. However, since torsion spring 51 is engaged with both of clutch release fork lever 40 and clutch release fork 50, the pivotal movement of clutch release fork lever 40 is transmitted to clutch release fork 50. That is, torsion spring 51 for pressing the clutch release bearing is provided between clutch release fork lever 40 and clutch release fork 50. In addition, stopper 43 which receives the reaction force of torsion spring 51 is provided on the clutch release fork lever 40 side. Clutch release fork 50 is pressed against the clutch cover side by the force of torsion spring 51, to allow clutch release bearing 80 to be pressed against a diaphragm spring 70 of the clutch cover with stability and at continuously constant load.

Clutch release device 1 according to the above-described present invention includes clutch release fork lever 40 connected to a clutch cable 20, clutch release fork 50 connected to and rotatable with clutch release fork lever 40, and capable of pressing clutch release bearing 80, and torsion spring 51 as an urging member urging clutch release fork 50 such that clutch release fork 50 presses clutch release bearing 80.

In clutch release device 1 according to the above-described second embodiment, clutch release bearing 80 is pressed stably at constant load, which makes it possible to match the revolution number of clutch release bearing 80 with the revolution number of the clutch cover, and to suppress unusual noise caused by the relative revolution of the clutch cover and clutch release bearing 80 and wear of diaphragm spring 70 of the clutch cover.

Furthermore, even if clutch disc 60 is worn and the positions of pressure plate 90 and clutch release bearing 80 are changed, these position changes can be absorbed by torsion spring 51. Consequently, clutch release bearing 80 can be moved to the transmission side, the pressing force of pressure plate 90 of the clutch cover does not decrease, and no clutch slippage occurs.

In addition, the maintenance of clutch cable 20 due to wear of clutch disc 60 can be alleviated, and therefore, can be simplified.

Since clutch release fork lever 40 does not move, the pedal height also does not change, which causes no discomfort at the time of pedal step-down.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### Industrial Applicability

The present invention can be applied, for example, to the field of a clutch incorporated in a vehicle.

## Claims

1. A clutch release device comprising:
a clutch release fork lever (40) connected to a clutch cable (20); and
a clutch release fork (50) connected to and rotatable with said clutch release fork lever (40), and capable of pressing a clutch release bearing (80), **characterized in that**
said clutch release fork lever (40) and said clutch release fork (50) are fitted through splines (42, 52) or gears having a backlash such that an axial movement of said clutch release fork (50) caused by wear of a clutch disc (60) is absorbed.

2. The clutch release device according to claim 1, further comprising an urging member (51) urging said clutch release fork (50) such that said clutch release fork (50) presses the clutch release bearing (80).

## Patentansprüche

1. Kupplungsausrückvorrichtung, aufweisend:
einen Kupplungsausrückgabelhebel (40), der mit einem Kupplungskabel (20) verbunden ist; und
eine Kupplungsausrückgabel (50), die mit dem Kupplungsausrück-Gabelhebel (40) verbunden ist und mit diesem gedreht werden kann und auf ein Kupplungsausrücklager (80) drücken kann, **dadurch gekennzeichnet, dass**
der Kupplungsausrück-Gabelhebel (40) und die Kupplungsausrückgabel (50) durch Keilprofilelemente (42, 52) oder Zahnräder mit einem Zahnspiel derart zusammengepasst sind, dass eine axiale Bewegung der Kupplungsausrückgabel (50), die durch einen Verschleiß der Kupplungsscheibe (60) bewirkt wird, aufgehoben wird.

2. Kupplungsausrückvorrichtung nach Anspruch 1, ferner aufweisend ein Vorspannelement (51), das die Kupplungsausrückgabel (50) derart vorspannt, dass die Kupplungsausrückgabel (50) auf das Kupplungsausrücklager (80) drückt.

## Revendications

1. Dispositif de débrayage comprenant :
un levier à fourche de débrayage (40) raccordé à un câble d'embrayage (20) ; et
une fourche de débrayage (50) raccordée à et pouvant tourner avec ledit levier à fourche de débrayage (40) et pouvant comprimer un palier de débrayage (80), **caractérisé en ce que** :
ledit levier à fourche de débrayage (40) et ladite fourche de débrayage (50) sont montés dans des cannelures (42, 52) ou engrenages ayant un jeu de sorte qu'un mouvement axial de ladite fourche de débrayage (50) provoqué par l'usure d'un disque d'embrayage (60) est absorbé.

2. Dispositif de débrayage selon la revendication 1, comprenant en outre un élément de poussée (51) poussant ladite fourche de débrayage (50) de sorte que ladite fourche de débrayage (50) comprime le palier de débrayage (80).
